(19) Europäisches Patentamt
European Patent Office
Office européen des brevets

(11) **EP 1 219 060 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(51) Int Cl.:
***H04L 1/00*** *(2006.01)*     ***H04L 1/08*** *(2006.01)*

(21) Anmeldenummer: **00969267.4**

(22) Anmeldetag: **19.09.2000**

(86) Internationale Anmeldenummer:
**PCT/EP2000/009174**

(87) Internationale Veröffentlichungsnummer:
**WO 2001/026274 (12.04.2001 Gazette 2001/15)**

(54) **VERFAHREN UND VORRICHTUNG ZUM ÜBERMITTELN VON DATENRAHMEN UND VERFAHREN UND VORRICHTUNG ZUR DATENRATENANPASSUNG**

METHOD AND DEVICE FOR TRANSMITTING DATA FRAMES AND A METHOD AND A DEVICE FOR ADAPTING DATA RATES

PROCEDE ET DISPOSITIF DE TRANSMISSION DE TRAMES DE DONNEES ET PROCEDE ET DISPOSITIF D'ADAPTATION DES DEBITS DE DONNEES

(84) Benannte Vertragsstaaten:
**DE FR GB IT**

(30) Priorität: **07.10.1999 EP 99119188**

(43) Veröffentlichungstag der Anmeldung:
**03.07.2002 Patentblatt 2002/27**

(73) Patentinhaber: **Siemens Aktiengesellschaft**
**80333 München (DE)**

(72) Erfinder: **RAAF, Bernhard**
**81475 München (DE)**

(56) Entgegenhaltungen:
**EP-A- 0 912 009    WO-A-97/16899**

**EP 1 219 060 B1**

## Beschreibung

Die vorliegende Erfindung betrifft ein Verfahren und eine Vorrichtung zum Übermitteln von Datenrahmen und ein Verfahren und eine Vorrichtung zur Datenratenanpassung, insbesondere unter Verwendung einer Wiederholung zu übertragender Bits.

Digitale Kommunikationssysteme sind für die Übermittlung von Daten durch Darstellung der Daten in einer Form ausgelegt, die die Übertragung der Daten über ein Kommunikations-Medium erleichtert. Zum Beispiel werden im Fall von Funkübermittlungen die Daten als Funksignale dargestellt zwischen Sendern und Empfängern des Kommunikationssystems übertragen. Im Fall von Breitband-Telekommunikationsnetzen können die Daten als Licht dargestellt werden und zum Beispiel über ein faseroptisches Netz zwischen Sendern und Empfängern des Systems übermittelt werden.

Während der Übertragung von Daten können Bit oder Symbole der übermittelten Daten verfälscht werden, mit dem Effekt, dass diese Bit oder Symbole im Empfänger nicht korrekt bestimmt werden können. Aus diesem Grund enthalten die Datenkommunikationssysteme häufig Mittel zum Mildern der Verfälschung der Daten, die während der Übertragung auftritt. Eines dieser Mittel besteht darin, Sender des Systems mit Codierern auszustatten, die die Daten vor der Übertragung gemäß einem Fehlersteuercode codieren. Der Fehlersteuercode ist so ausgelegt, dass er auf eine gesteuerte Weise den Daten Redundanz hinzufügt. Im Empfänger können Fehler, die während der Übertragung eintreten, korrigiert werden, indem der Fehlersteuercode decodiert wird, wodurch die ursprünglichen Daten wiederhergestellt werden. Die Decodierung wird unter Verwendung eines Fehlerdecodierungsalgorithmus bewirkt, der dem Fehlersteuercode entspricht, der dem Empfänger bekannt ist.

Nachdem die Daten codiert wurden, ist es zur Datenratenanpassung (rate matching) häufig erforderlich, Datenbit oder Symbole aus einem Block codierter Daten zu punktieren oder zu repetieren (Wiederholen), bevor diese Daten übertragen werden. Der Begriff Punktierung/Wiederholung soll hier einen Prozeß des Entfernens oder Löschens von Bit aus einem codierten Datenblock bedeuten, mit dem Effekt, dass die punktierten Bit nicht mit diesem Datenblock übertragen werden bzw. einen Prozeß des Wiederholens von Bit aus einem codierten Datenblock bedeuten, mit dem Effekt, dass die zu wiederholenden Bit mehrmals mit diesem Datenblock übertragen werden. Auch wenn im Folgenden häufig nur ein Begriff "Punktierung" bzw. "Repetierung/Wiederholung" verwendet wird, so ist die vorliegende Erfindung selbstverständlich auch für den anderen Fall "Repetierung/Wiederholung" bzw. "Punktierung" einsetzbar.

Das Punktieren könnte zum Beispiel erforderlich sein, weil ein Mehrfachzugriffsverfahren, das zur Übermittlung der Daten über die datenführenden Medien dient, eine Formatierung der Daten zu Blöcken mit vorbestimmter Größe erfordert, die nicht der Größe des codierten Datenrahmens entspricht.

Um den codierten Datenrahmen in dem Transport-Datenblock mit der vorbestimmten Größe unterzubringen, werden Datenbit aus dem codierten Datenrahmen deshalb entweder punktiert, um die Größe des codierten Datenblocks zu verkleinern, in einem Fall, bei dem der codierte Datenrahmen größer als die Größe des Transportblocks ist, oder Bit des codierten Datenrahmens wiederholt, in einem Fall, bei dem der codierte Datenrahmen kleiner als die vorbestimmte Größe des Transportblocks ist. In einem Fall, in dem der Datenrahmen kleiner als der Transportdatenblock ist, werden die Datenbit (Bit) oder -symbole in einem zum Füllen des Rests des Transportdatenblocks notwendigen Ausmaß wiederholt (repetiert).

Fachleuten ist bekannt, dass eine Auswirkung des Punktierens eines codierten Datenrahmens darin besteht, dass die Wahrscheinlichkeit für die korrekte Wiederherstellung der ursprünglichen Daten verringert wird. Außerdem ist die Leistung bekannter Fehlersteuercodes und von Decodierern für diese Fehlersteuercodes dann am besten, wenn die Fehler, die während der Übertragung der Daten auftreten, durch Gaußsches Rauschen verursacht werden, da dies den Effekt hat, dass die Fehler unabhängig über den Transportdatenblock verteilt sind. Wenn ein codierter Datenrahmen punktiert werden soll, sollten die Positionen in dem codierten Datenrahmen, an denen Bit punktiert werden, soweit wie möglich voneinander getrennt werden. Insofern sollten die Punktierungspositionen gleichmäßig über den Datenrahmen verteilt werden. Da Fehler während der Übertragung häufig stoßweise auftreten, insbesondere im Fall von Funkkommunikationssystemen, die keine Verschachtelung einsetzen, und da durch die Wiederholungen von Bit nicht die Qualität nur in einem gewissen Bereich des Datenrahmens besonders erhöht werden soll sondern möglichst gleichmäßig, sollten auch Bit-Positionen in einem codierten oder uncodierten Datenrahmen, an denen Datenbit wiederholt werden sollen, so angeordnet werden, dass sie im gesamten Datenrahmen gleichmäßig voneinander getrennt sind.

EP 0912009 offenbart eine Datenratenanpessungsvorrichtung wobei lediglich eine stets starr erfolgende gleichartige Repetierung for jeden Rahmen bzw. Block durchgeführt wird.

Zu bekannten Verfahren zum Auswählen der Positionen von Bit oder Symbolen, die in einem codierten Datenrahmen punktiert oder wiederholt werden sollen, gehört das Dividieren der Anzahl von Bit oder Symbolen in einem Rahmen durch die Anzahl von Bit oder Symbolen, die punktiert oder wiederholt werden sollen, und das Auswählen von Bit-Positionen mit ganzzahligen Werten entsprechend der Division. In einem Fall, bei dem die Anzahl von zu punktierenden Bit keine ganzzahlige Division der Anzahl der Bits des Datenrahmens ist, kommt es jedoch nicht zu einer gleichmäßigen Beabstandung der punktierten oder wiederholten Bit-Positionen, wodurch der Nachteil entsteht, dass bestimmte Bit-Positionen näher als diese ganze Zahl zueinander liegen oder weiter als diese ganze Zahl voneinander entfernt liegen (teils deutlich weiter) und in manchen Fällen auch nebeneinander liegen.

Häufig wird die Verschachtelung in einem Transport-Multiplexverfahren in zwei Schritten durchgeführt. Die verschiedenen Lösungen der Durchführung der Punktierung/Repetierung haben bestimmte Konsequenzen wenn die Punktierung nach dem ersten Verschachtler (1st interleaver) durchgeführt wird, so wie das für das UMTS-System vorgesehen ist. Dabei muss besonders darauf geachtet werden, dass sich bei Verwendung eines Block-Verschachtlers mit einer Spaltenvertauschung, wie dem in UMTS verwendeten FS-MIL (FS-Multistage Interleaver) als Verschachteler in dem Aufwärtsstrecken-Multiplexverfahren in Verbindung mit einem Ratenanpassungsalgorithmus die Leistung verschlechtern könnte. Nach dem genannten ersten Verschachtler werden die einem Rahmen zugeordneten Bits noch durch einen zweiten Verschachtler verschachtelt, der beispielsweise beschrieben ist in TS 25.212 (genauere Angabe siehe unten), Kapitel "4.2.11 2nd interleaving". Dieser zweite Verschachtler hat aber keinen Einfluss auf Aspekte der Punktierung/Repetierung und wird daher im folgenden nicht weiter berücksichtigt; hinsichtlich der vorliegewnden Erfindung ist er bedeutungslos. Daher wird der obengenannte erste Verschachtler in diesem Dokument oft auch einfach Verschachtler genannt.

Ein Block-Verschachtler mit einer Spaltenvertauschung funktioniert folgendermaßen: Zuerst werden die Bits zeilenweise in eine Matrix eingeschrieben. Diese Matrix besteht aus F Spalten, wobei F die Anzahl der Rahmen (im folgenden häufig auch Funkrahmen bzw. Spalten genannt) ist, auf die die Daten eines Datenrahmens verteilt werden; Siehe auch TS 25.212 (genauere Angabe siehe unten) Kapitel "4.2.5 1st interleaving".

In der derzeitigen Version des UMTS Standards (3GPP TSG RAN WG1; Multiplexing and channel coding (FDD); TS 25.212 V2.3.0 (1999-10)) Kapitel "4.2.7 Rate matching", insbesondere Abschnitt "4.2.7.1.2 Determination of parameters needed for calculating the rate matching pattern" ist eine Methode dargestellt, die in dem Beitrag R1-99641 (Siemens; Properties of optimised puncturing scheme; TSG-RAN WG1#5, June 1-4, Cheju, Korea) vorgestellt wurde. Diese Methode verteilt punktierte Bits so gleichmäßig wie möglich und vermeidet insbesondere den Fall, dass nahe nebeneinanderliegende Bits punktiert werden. Dies wird auch für den Fall erreicht, dass die Punktierung nach dem (Inter-Rahmen)-Verschachtler angewandt wird. Das selbe Verfahren kann auch für den Fall der Wiederholung angewandt werden und führt dabei ebenfalls zu guten Ergebnissen.

In dem erwähnten Beitrag R1-99641 wurden die folgenden Modifikationen zum Ratenanpassungsverfahren vorgeschlagen: Die Ratenanpassung wurde durch Punktierungs-/Wiederholungsmuster dadurch durchgeführt, dass ein gemeinsames Muster auf alle Rahmen angewandt wird, wobei das Muster bei den einzelnen Rahmen verschoben wird. Für die Berechnung der Verschiebung wurden einfache Berechnungsvorschriften angegeben, die den Effekt der Spaltenvertauschung (statt "row-by-row-processing" wird hier der Begriff Spaltenvertauschung gebraucht, teils auch column randomizing oder Spaltenrandomisierung genannt) durch den Verschachtler (z.B. ein FS-MIL)) berücksichtigen.

Dadurch, dass der Vorgang der Spaltenvertauschung in den Formeln berücksichtigt wird, wird derselbe Effekt erreicht, wie wenn die Ratenanpassung vor der Spaltenvertauschung des Verschachtlers durchgeführt würde, obwohl sie aus praktischen Gründen danach durchgeführt werden muss. Dies wird dadurch erreicht, dass die Spaltenvertauschungsregel, genauer gesagt ihre Umkehrung RF (bzw. $R_F$ oder RF(k) bzw. $R_F(k)$) in den Formeln zur Berechnung von S (der Verschiebung des Musters pro Spalte bzw. Rahmen) bzw. $e_{offset}$ (ein Parameter, der in dem weiter unten vorgestellten Ratenanpassungsalgorithmus, der pro Rahmen durchgeführt wird, verwendet wird) berücksichtigt wird. Ähnliche Prozeduren lassen sich für Punktierung und Wiederholung verwenden, wobei die vorliegende Erfindung insbesondere den Fall der Wiederholung behandelt. Die durch andere Vorgaben nötige Durchführung der Ratenanpassung nach dem ersten Verschachtler hat dabei Konsequenzen für die optimale Generierung von Punktierungs- und Wiederholungsmustern.

Das Ziel eines guten Wiederholungs-Verfahrens ist es, die wiederholten Bits so gleichmäßig wie möglich zu verteilen. Das selbe gilt auch für ein gutes Punktierungs-Verfahren. Das in dem oben erwähnten Beitrag R1-99641 vorgestellte Verfahren arbeitet wie im folgenden dargestellt (der Einfachheit halber wird im folgenden nicht immer Punktierung/Wiederholung geschrieben, sondern nur eine Alternative erwähnt; selbstverständlich sind die Ausführungen auch für die andere Alternative anwendbar): Die gleichmäßigste Verteilung kann erreicht werden, wenn jedes n-te Bit wiederholt wird. Falls die Wiederholungsrate bzw. n allerdings nicht ganzzahlig ist, muss der Abstand variiert werden, d.h. manchmal muss das n-te und manchmal das n+1-te Bit wiederholt werden. Man kann versuchen, dieses Prinzip auch dann anzuwenden, wenn die Wiederholung nach dem ersten Verschachtler angewandt wird, allerdings besteht in diesem Fall eine weitere Nebenbedingung: die wiederholten Bits müssen gleichmäßig auf alle Funkrahmen verteilt werden.

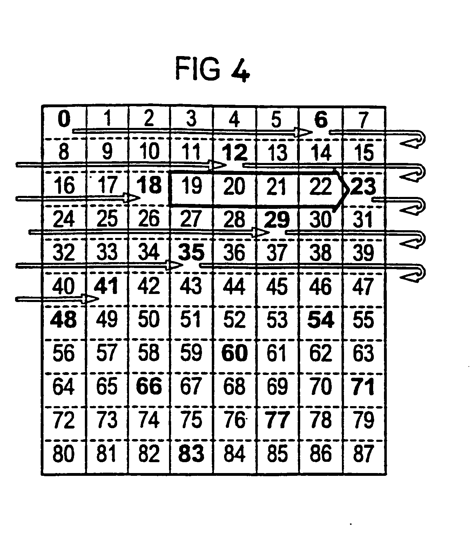

Als Beispiel wird in Figur 4 ein Interleaving-Intervall von 80ms und eine Wiederholungsrate von 1:6 angenommen werden. Die fett gedruckten Ziffern kennzeichnen die zu wiederholenden Bits. Würde man jedes 6-te Bit wiederholen, so würden nur Bits in den Spalten 0,2,4,6 aber nicht in den Spalten 1,3,5,7 wiederholt, was zu einer ungleichmäßigen Verteilung der wiederholten Bits auf die Funkrahmen führt. Um die Wiederholungen auf alle Spalten gleichmäßig zu verteilen, wird das Wiederholungsintervall manchmal (in diesem Beispiel einmal) abgeändert, um zu verhindern, dass immer die selben Spalten punktiert werden. Dies wird in Fig. 4 gezeigt. Die schmalen horizontalen Pfeile in dünnen Umrißlinien zeigen einen Wiederholungsabstand von 6 und der breite horizontale Pfeil in dicker Umrißlinie einen davon unterschiedlichen Wiederholungsabstand von 5, um zu vermeiden, dass die erste Spalte zu früh ein zweites Mal wiederholt wird. Nachdem jede Spalte einmal wiederholt wurde, kann das Wiederholungsmuster um 6 Zeilen nach unten verschoben werden, um so die nächsten zu wiederholenden Bits (beginnend bei 48) zu bestimmen und so weiter. Offensichtlich ist dieses Vorgehen dazu äquivalent, in einer Spalte jedes 6-te Bit zu punktieren und dieses Punktierungsmuster in unterschiedlichen Spalten relativ zueinander zu verschieben.

Im folgenden werden anhand des Beispiels der Punktierung die Formeln bzw. das Berechnungsverfahren für das optimierte Verfahren angegeben, das in dem erwähnten Beitrag R1-99641 definiert ist und für den Fall der Punktierung am besten geeignet ist.

Die Anzahl der Bits pro Funkrahmen vor der Raten-anpassung sei mit $N_c$, die Anzahl der Bits pro Funkrahmen nach der Raten-anpassung sei mit $N_i$, der Index bzw. die Position eines zu punktierenden/wiederholenden Bits in der ersten Spalte (k=0) mit $m_j$, die Rahmennummer mit k, und die Anzahl der Rahmen, über die das Interleaving durchgeführt wird mit F bezeichnet. Es wird im wesentlichen der Fall $N_c > N_i$, d.h. Punktierung, betrachtet. Die Formeln sind aber auch für den Fall der Wiederholung anwendbar. In dem Beispiel gelte folgender erster Satz von Parametern: $N_c = 20$, $N_i = 16$, $m_1 = 4$, $m_2 = 9$, $m_3 = 14$, $m_4 = 19$, k=0, ...7, und F=8. Die Verschiebung des Punktierungsmusters kann dann mit den folgenden Formeln ermittelt werden. Hier und im Rahmen der gesamten Anmeldung erfolgt nach dem Doppelstrich "--" eine Kommentierung der entsprechenden Schritte.

```
-- Berechnung des mittleren Punktierungsabstands.

q:=  (⌊Nc/(|Ni-Nc|)⌋) mod F    -- ⌊ ⌋ bedeutet abrunden und ||
den Absolutbetrag.

Q:=  (⌊Nc/(|Ni-Nc|)⌋) div F

if  q ist gerade -- behandle Spezialfall.
      then q = q -lcd(q, F)/F
      -- hier bezeichnet lcd (q, F) den größten gemeinsamen
Teiler von q und F.
      -- Der größte gemeinsame Teiler kann leicht durch Bit-
manipulationen berechnet werden, wenn F eine Zweierpotenz
ist.
      -- Aus dem selben Grund können die Berechnungen mit p
leicht durch binäre Fixpunktoperationen durchgeführt werden
(oder alternativ durch integer-Arithmetik unter Verwendung
von Verschiebeoperationen.
endif
-- Berechnen von S und T; S stellt die Verschiebung der
Zeile mod F und T den Verschiebebetrag div F dar;
S stellt also die Verschiebung der Zeile bezüglich q (also
mod F) und T den Verschiebebetrag bezüglich Q (also div F)
dar.
for i = 0 to F-1
      S(RF (⌈i*q⌉ mod F)) = (⌈i*q⌉ div F)   -- wobei ⌈ ⌉ Aufrun-
den bedeutet.
      T((RF (⌈i*q⌉ mod F)) = i           -- RF(k) kehrt den
Verschachtler um,
end for
```

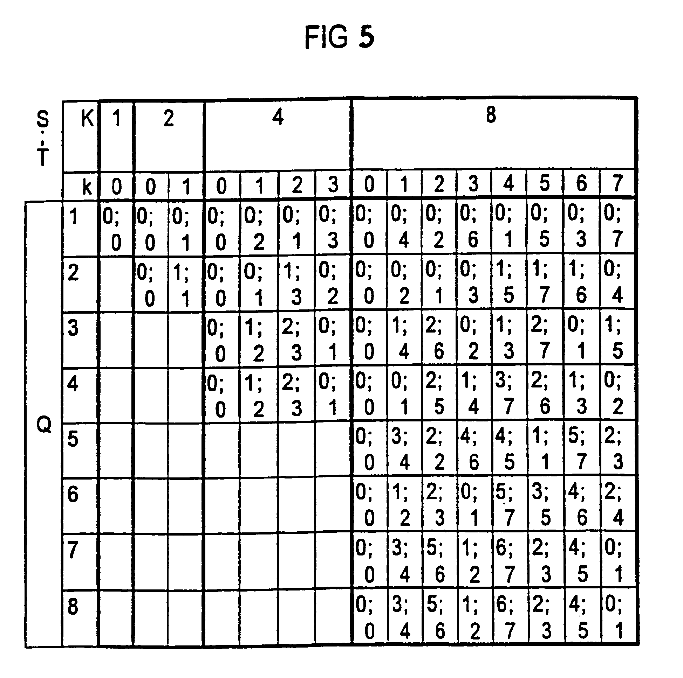

Bei einer realen Implementierung können diese Formeln, wie in Figur 5 gezeigt, als eine Nachschlagetabelle implementiert werden. Die Tabelle enthält außerdem den Effekt der durch RF(k) berücksichtigten Spaltenvertauschung. S kann offensichtlich als eine weitere Implementierungsoption auch aus T berechnet werden.

Danach kann eoffset ($e_{offset}$) folgendermaßen berechnet werden:

$$eoffset\ (k)\ =\ ((2*S)\ +\ 2*T*Q\ +1)*\ y\ +\ 1)\ mod\ 2Nc$$

Mit eoffset (k) wird dann e im Ratenanpassungsverfahren für UMTS vorgeladen. Diese Wahl von eoffset bewirkt offensichtlich eine Verschiebung der Punktierungsmuster der Spalten relativ zueinander bzw. relativ zur mit k=0 bezeichneten Spalte um den Betrag S + T * Q.

$e_{offset}$ wird manchmal auch $e_{init}$ genannt. Das Ratenanpassungsverfahren für UMTS, das innerhalb eines einzelnen Rahmens angewandt wird, ist beschrieben in TS25.212 (genauere Angabe siehe oben), section 4.2.7.4 "Rate matching pattern determination". Es beschreibt ein auf einer Fehlerkontrolle basierendes Punktierungs- bzw. Wiederholungsverfahren. Dieses Verfahren wird hier nochmals beschrieben:

Vor der Ratenanpassung seien die Bits wie folgt bezeichnet: $x_{i,1}$, $x_{i,2}$, $X_{i,3}$, $x_{i,4}$, ... $x_{i,N}$, dabei bedeutet $i$ die Nummer des Transportkanals (TrCH number) und N ist der Parameter, der in Kapitel 4.2.7.2 der TS 25.212 definiert ist.

Der Ratenanpassungsalgorithmus arbeitet dann wie folgt:

```
if Punktierung soll durchgeführt werden:

     e = eini    -- Anfänglicher Fehler zwischen der aktuellen
und erwünschten Punktierungsrate.

     m = 1            -- Index für das aktuell behandelte Bit.
```

```
do while m <= N

        e = e - e_minus            -- Fehlerwert anpassen.

        if e <= 0 then             -- Abfrage, ob Bit Nummer
        m punktiert werden soll.

            Punktiere Bit x_{i,m}

            e = e + e_plus   -- Fehlerwert anpassen.

        end if

        m = m + 1                   -- Nächstes Bit.

    end do

else
    e = e_ini                   -- Anfänglicher Fehler zwi-
    schen der aktuellen und erwünschten Punktierungsra-
    te.

    m = 1                        -- Index für das aktuell be-
    handelte Bit.

    do while m <= N

        e = e - e_minus            -- Fehlerwert anpassen.

        do while e <= 0        -- Abfrage, ob Bit Nummer
        m wiederholt werden soll.

            wiederhole Bit x_{i,m}

            e = e +  e_plus -- Fehlerwert anpassen.

        end do

        m = m + 1                  -- Nächstes Bit.

    end do

end if
```

Falls ein Bit wiederholt wird, so wird es unmittelbar nach dem ursprünglich schon vorhandenen Bit eingefügt.

Eine vereinfachte Darstellung ist im folgenden beschrieben, welche sich einfach daraus ergibt, dass die Berechnung von q und Q nicht getrennt für den Rest bei der Teilung durch F und das Vielfache von F durchgeführt wird, sondern kombiniert für beide Anteile. Des gleichen können S und T nicht getrennt für q und Q berechnet werden, sondern ebenfalls kombiniert berechnet werden. Die Substitution q+F*Q --> q und S+Q*T --> S ergibt die folgende äquivalente Darstellung. Je nach den Details der Implementierung kann die eine oder andere Berechnungsmethode (oder weitere dazu ebenfalls äquivalente Methoden) günstiger durchgeführt werden.

```
-- Berechnen der mittleren Punktierungsdistanz
q:= (⌊Nc/(|Ni-Nc|)⌋)  -- wobei ⌊ ⌋ Abrunden und | | Absolutwert
bedeutet.
if q ist gerade   -- Sonderfall behandeln.
        then q = q - lcd(q, F)/F  -- wobei lcd(q, F) den größten gemeinsamen Teiler von q und F bedeutet.
        -- man beachte, dass lcd leicht durch Bitmanipulatio-
nen berechnet werden kann, weil F eine Zweierpotenz ist.
        -- aus demselben Grund können Berechnungen mit q
leicht mit binärer Festkommaarithmetik (oder Ganzzahl-
Arithmetik und einigen wenigen Schiebeoperationen) durchge-
führt werden.
endif
-- Berechnen von S(k) der Verschiebung der Spalte k .
for i = 0 to F-1
        S(RF (⌈i*q⌉ mod F)) = (⌈i*q⌉ div F)  -- wobei ⌈ ⌉ Aufrun-
den bedeutet.
-- RF(k) kehrt den Verschachtler um.
end for
```

Danach kann $e_{offset}$ folgendermaßen berechnet werden:

$$e_{offset}\ (k)\ =\ ((2*S)*\ y\ +\ 1)\ \text{mod}\ 2Nc$$

Mit $e_{offset}$ (k) wird dann e im voraus in dem Ratenanpassungsverfahren initialisiert.

Fachleuten ist bekannt, dass die in dieser Definition von $e_{offset}$ verwendete Konstante 1 auch durch einen beliebigen anderen Wert ersetzt werden kann, wenn er für alle Spalten bzw. Rahmen identisch ist. Aus Gründen der vereinfachten Darstellung wird hierauf im folgenden nicht explizit eingegangen werden. Des weiteren kann man die vorgestellten Verfahren noch weiter modifizieren oder erweitern, wobei aber die Grundannahmen weiter erhalten bleiben.

Falls die Punktierungsrate ein ungeradzahliger Bruchteil (d.h. mit ungeradem Nenner), z.B. 1:5 oder 1:9 ist, wird durch dieses bekannte Verfahren dasselbe perfekte Punktierungmuster erzeugt, das durch das Punktieren unter Verwendung des Ratenanpassungsverfahrens direkt vor dem Verschachteln angewandt würde. In anderen Fällen werden niemals benachbarte Bits punktiert; eine Distanz zwischen punktierten Bit kann aber um bis zu lcd(q,F)+1 größer als die anderen sein. Dieses Verfahren kann entsprechend auch auf Bitwiederholungen (Bitrepetierungen) angewandt werden. Obwohl das Wiederholen benachbarter Bits die Leistungsfähigkeit der Fehlerkorrekturcodes nicht so stark beeinträchtigt, wie das beim Punktieren benachbarter Bits der Fall ist, ist es dennoch vorteilhaft, wiederholte Bit so gleichmäßig wie möglich zu verteilen.

Die grundsätzliche Zielsetzung dieses bekannten Verfahrens besteht darin, einen gleichmäßigen Abstand zwischen den punktierten Bits in der ursprünglichen Reihenfolge zu erzielen, wobei aber die Einschränkung berücksichtigt wird, dass in den verschiedenen Rahmen die gleiche Anzahl von Bits zu punktieren ist. Dies wird dadurch erreicht, dass die Punktierungsdistanz in bestimmten Fällen um 1 verringert wird. Das vorgestellte Verfahren ist insofern optimal, als es die Distanz niemals um mehr als 1 verringert und sie nur so oft wie notwendig verringert. Dies ergibt das bestmögliche Punktierungsmuster unter den oben erwähnten Einschränkungen.

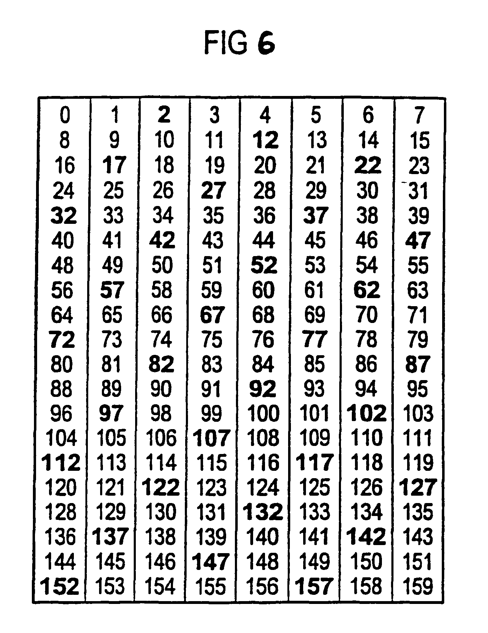

Das folgende Beispiel zeigt die Verwendung des ersten Satzes von Parametern ($N_c$=20, $N_i$=16, $m_1$=4, $m_2$=9, $m_3$=14, $m_4$=19, k=0, ...7, und F=8), d.h. Punktieren mit 1:5 (Figur 6). Das optimierte Verfahren vermeidet offensichtlich nicht nur das Punktieren benachbarter Bit, sondern verteilt punktierte Bit außerdem mit gleichem Abstand in der ursprünglichen Folge. Tatsächlich werden dieselben Eigenschaften erzielt, als ob das Punktieren direkt nach dem Codieren vor dem Verschachteln durchgeführt worden wäre.

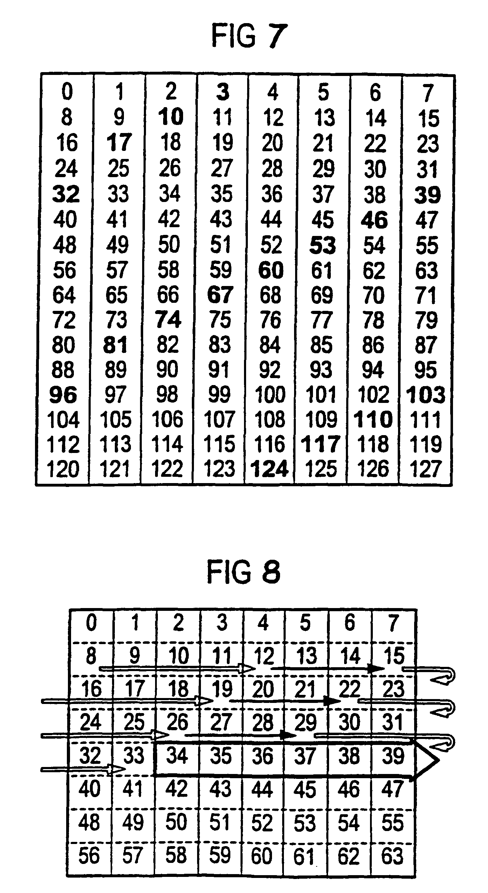

Es soll nun der nächste Fall untersucht werden, d.h. das Punktieren mit 1:8 (Figur 7). Wieder wird das Punktieren benachbarter Bit vermieden. In diesem Fall ist es nicht möglich, eine gleichmäßig beabstandete Punktierung zu erzielen, weil dann alle Bit eines einzelnen Rahmens punktiert würden, was völlig unannehmbar ist. In diesem Fall betragen die meisten der Distanzen zwischen benachbarten Bit 7 (nur 1 weniger als bei einer optimalen Verteilung). Dafür sind manche Distanzen größer (jede achte).

Es zeigte sich allerdings , dass die bisher vorgeschlagenen Lösungen, d.h. das vorgeschlagene Punktierungsmuster bei der Anwendung als Wiederholungsmuster, noch immer nicht in allen Fällen optimal ist. Ausgehend davon liegt der Erfindung die Aufgabe zugrunde, diese Nachteile des Standes der Technik zu verringern. Insbesondere ist es Aufgabe der vorliegenden Erfindung, eine technische Lehre anzugeben, die, insbesondere im Fall der Wiederholung von Bits, im Empfänger eine Decodierung mit guter Qualität ermöglicht.

Diese Aufgabe wird gelöst durch die Merkmale der unabhängigen Ansprüche. Weiterbildungen der Erfindung ergeben sich aus den Unteransprüchen.

Die Erfindung basiert demnach auf der Erkenntnis, dass das Decodierergebnis im Empfänger von den Wiederholungsmustern im Sender abhängt, und die Kriterien für ein gutes Punktierungs-muster und ein gutes Wiederholungsmuster voneinander unterschiedlich sind. Durch eine besondere Berücksichtigung der Kriterien, die für ein gutes Wiederholungsmuster bei der Bestimmung des Wiederholungsmusters relevant sind, kann für den Fall der Wiederholung eine Verbesserung der Leistung im Vergleich zu den in R1-99641 vorgestellten Mustern erreicht werden.

Ausführungsformen der vorliegenden Erfindung werden lediglich als Beispiel mit Bezug auf die beigefügten Zeichnungen beschrieben. Es zeigen:

Fig. 1 1:4 Wiederholungsmuster, das sich bei der Anwendung eines Ausführungsbeispiels der vorliegenden Erfindung ergibt;

Fig. 2 ein Blockschaltbild eines Mobilfunkkommunikationssystems;

Fig. 3 ein Blockschaltbild einer Datenkommunikationsvorrichtung, die eine Strecke zwischen der Mobilstation und einer Basisstation des in Fig. 2 gezeigten Kommunikationsnetzes bildet; $x_{i,1}$;

Fig. 4 Ausführungsbeispiel eines Prinzips eines optimierten Punktierungsschemas (Stand der Technik);

Fig. 5 Lookup Tabelle (Stand der Technik);

Fig. 6 1$^{st}$ interleaving von 80 ms und 1:5 Punktierung (Stand der Technik);

Fig. 7 1:8 Punktierung mit Verfahren aus R1-99641 (Stand der Technik);

Fig. 8 *1:4* Punktierung mit Verfahren aus R1-99641 (Stand der Technik).

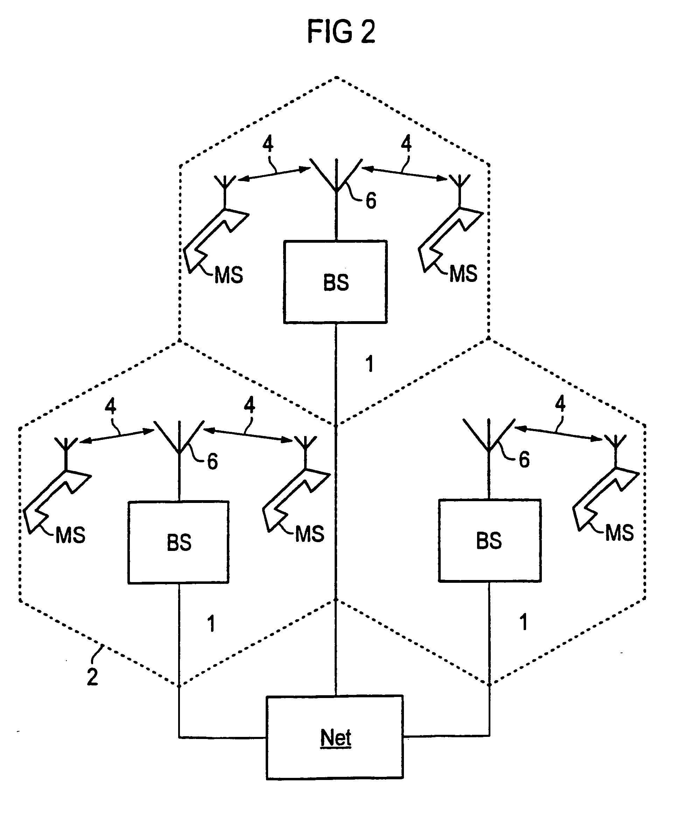

Eine beispielhafte Ausführungsform der vorliegenden Erfindung wird mit Bezug auf ein Mobilfunkkommunikationssystem beschrieben. Mobilfunkkommunikationssysteme werden mit Mehrfachzugriffssystemen ausgestattet, die zum Beispiel gemäß dem Mehrfachzugriff im Zeitmultiplex (TDMA) arbeiten, wie zum Beispiel dem in dem Globalen Mobilfunksystem (GSM), einem durch das Europäische Telekommunikationsstandardinstitut standardisierten Mobilfunkkommunikationsstandard, verwendeten. Als Alternative könnte das Mobilfunkkommunikationssystem mit einem Mehrfachzugriffsystem ausgestattet werden, das gemäß dem Mehrfachzugriff im Codemultiplex (CDMA) arbeitet, wie zum Beispiel dem für das universelle Mobiltelekommunikationssystem der dritten Generation vorgeschlagenen UMTS System. Es ist jedoch ersichtlich, dass zur Darstellung einer beispielhaften Ausführungsform der vorliegenden Erfindung ein beliebiges Datenkommunikationssystem verwendet werden könnte, wie zum Beispiel ein lokales Datennetz oder ein Breitband-Telekommunikationsnetz, das gemäß dem asynchronen Übertragungsmodus arbeitet. Diese beispielhaften Datenkommunikationssysteme sind insbesondere dadurch gekennzeichnet, dass Daten als Rahmen, Pakete oder Blöcke übertragen werden. Im Fall eines Mobilfunkkommunikationssystems werden die Daten in Rahmen von datenführenden Funksignalen transportiert, die eine vorbestimmte Datengröße darstellen. Ein Beispiel eines solchen Mobilfunkkommunikationssystems ist in FIG. 2 gezeigt.

In FIG. 2 sind drei Basisstationen BS gezeigt, die in einem Funkabdeckungsbereich, der durch Zellen 1, die durch gestrichelte Linien 2 definiert sind, gebildet wird, Funksignale mit Mobilstationen MS austauschen. Die Basisstationen BS sind mit einem Netzrelaysystem NET zusammengekoppelt. Die Mobilstationen MS und die Basisstationen BS tauschen Daten aus, indem sie durch 4 gekennzeichnete Funksignale zwischen Antennen 6 übertragen, die an die Mobilstationen MS und an die Basisstationen BS angekoppelt sind. Die Daten werden unter Verwendung einer Datenkommunikationsvorrichtung, in der die Daten in die Funksignale 4 transformiert werden, die zu der Empfangsantenne 6 übermittelt werden, die die Funksignale erkennt, zwischen den Mobilstationen MS und den Basisstationen BS übermittelt. Die Daten werden durch den Empfänger aus den Funksignalen wiederhergestellt.

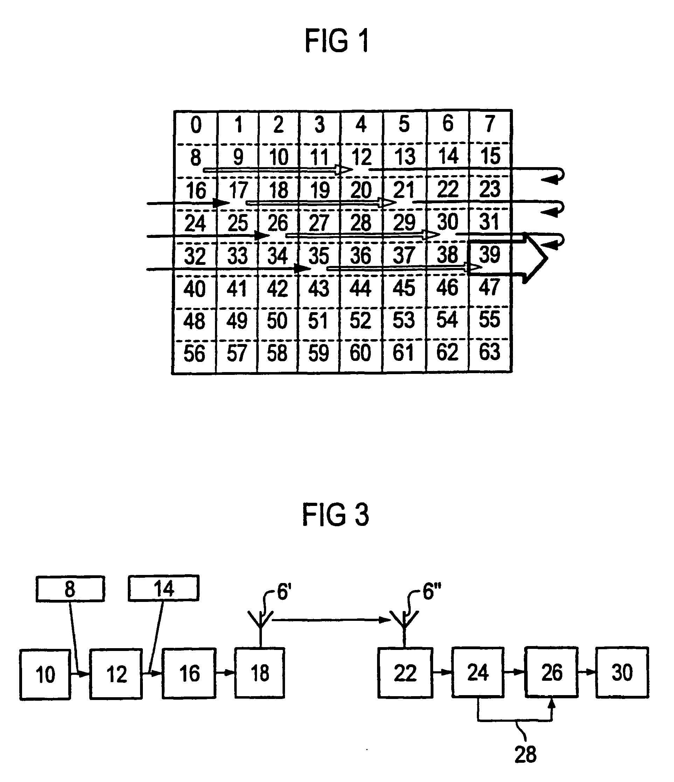

FIG. 3 zeigt ein Beispiel einer Datenkommunikationsvorrichtung, die eine Funkkommunikationsstrecke zwischen einer der Mobilstationen MS und einer der Basisstationen BS bildet, wobei Elemente, die auch in FIG. 2 erscheinen, identische Zahlenbezeichnungen tragen.

In FIG. 3 erzeugt eine Datenquelle 10 Datenrahmen 8 mit einer Rate, die durch einen Datentyp bestimmt wird, den die Quelle erzeugt. Die durch die Quelle 10 erzeugten Datenrahmen 8 werden einem Ratenumsetzer 12 zugeführt, der zum Umsetzen der Datenrahmen 8 zu Transportdatenblöcken 14 wirkt. Die Transportdatenblöcke 14 werden so ausgelegt, dass sie im wesentlichen gleich groß sind, mit einer vorbestimmten Größe und einer Datenmenge, die durch Rahmen von datenführenden Funksignalen getragen werden kann, über die Daten durch eine Funkschnittstelle übermittelt werden, die aus einem Paar eines Senders 18 und Empfängers 22 gebildet wird.

Der Datentransportblock 14 wird einem Funkzugriffsprozessor 16 zugeführt, der zur Ablaufsteuerung der Übertragung des Transportdatenblocks 14 über die Funkzugriffsschnittstelle wirkt. Zu einem entsprechenden Zeitpunkt wird der Transportdatenblock 14 durch den Funkzugriffsprozessor 16 einem Sender 18 zugeführt, der zum Umsetzen des Transportdatenblocks in den Rahmen von datenführenden Funsignalen wirkt, die in einer Zeitspanne übertragen werden, die für den Sender zugeteilt wird, um die Übermittlung der Funksignale zu bewirken. Im Empfänger 22 erkennt eine Antenne 6'' des Empfängers die Funksignale und führt eine Abwärts-Konvertierung und -Wiederherstellung des Datenrahmens durch, der einer Funkzugriff's-Ablaufsteuerungs-umkehrungsvorrichtung 24 zugeführt wird. Die Funkzugriffs-Ablaufsteuerungsumkehrungsvorrichtung 24 führt den empfangenen Datentransportblock einer Ratenumsetzungsumkehrungsvorrichtung 26 unter der Steuerung der Mehrfachzugriffs-Ablaufsteuerungs-umkehrungsvorrichtung 24 zu, die über einen Leiter 28 bewirkt wird. Die Ratenumsetzungsumkehrungsvorrichtung 26 führt danach eine Darstellung des wiederhergestellten Datenrahmens 8 einem Ziel bzw. einer Senke für den Datenrahmen 8 zu, das bzw. die durch den Block 30 dargestellt wird.

Der Ratenumsetzer 12 und die Ratenumsetzungsumkehrungsvorrichtung 26 sind so ausgelegt, dass sie soweit wie möglich optimal die in dem Transportdatenblock 14 verfügbare Datenführungskapazität ausnutzen. Dies wird gemäß der beispielhaften Ausführungsform der vorliegenden Erfindung durch den Ratenanpassungsumsetzer 12 bewirkt, der zum Codieren des Datenrahmens und anschließenden Punktieren oder Wiederholen von Datenbit oder -symbolen wirkt, die aus dem codierten Datenrahmen ausgewählt werden, mit dem Effekt, dass ein Transportdatenblock erzeugt wird, der in die Datenblöcke 14 passt. Der Ratenumsetzer 12 besitzt einen Codierer und einen Punktierer. Der dem Codierer zugeführte Datenrahmen 8 wird codiert, um einen codierten Datenrahmen zu erzeugen, der dem Punktierer zugeführt wird. Der codierte Datenrahmen wird dann durch den Punktierer punktiert, um den Datentransportblock 14 zu erzeugen.

Punktierung bzw. Wiederholung wird dadurch erreicht, dass ein gemeinsames Punktierungsmuster bzw. Wiederholungsmuster in den verschiedenen Rahmen relativ zueinander verschoben angewandt wird. obwohl die Punktierung/Wiederholung nach dem (Inter-Funkrahmen-)Verschachtler angewandt wird, wird der selbe Effekt d.h. das selbe Punktierungs-/Wiederholungs-muster erreicht, wie wenn die Punktierung/Wiederholung vor der Spaltenvertauschung angewandt würde.

Überraschenderweise läßt sich nun das oben beschriebene Verfahren aber für den Fall der Wiederholung noch verbessern. Dies ist möglich, weil gewisse Unterschiede zwischen guten Wiederholungs- und Punktierungsmustern bestehen: Bei einer Punktierung ist es besonders schädlich, aufeinanderfolgende Bits zu punktieren. Des weiteren sollte vermieden werden, dass der Abstand zwischen aufeinaderfolgenden punktierten Bits signifikant kleiner ist als der durchschnittliche Punktierungsabstand. Der Grund dafür ist, dass eine verstärkte bzw. in kürzerem Abstand durchgeführte Punktierung lokal die Bitfehlerrate überproportional erhöht, was dann die Gesamt-Performance beeinträchtigt.

Im folgenden werden die Änderungen erläutert, die vorgenommen werden, um das bekannte und eingangs erläuterte Verfahren für den Fall des Wiederholens zu verbessern. Das eingangs beschriebene Verfahren ist offensichtlich optimal, um eine gleichmäßige Verteilung punktierter Bits zu erreichen.

Das Wiederholen aufeinanderfolgender Bits führt nicht zu einer wesentlichen Verschlechterung der Decodierergebnisse. Allgemeiner ausgedrückt wird auch die Performance nicht wesentlich beeinträchtigt, wenn der Abstand aufeinaderfolgender Wiederholungen deutlich kleiner als der mittlere Wiederholungs-Abstand ist. Wenn der Abstand jedoch lokal deutlich höher ist, dann ist in diesem Bereich auch nicht die ansonsten durch Wiederholung ermöglichte verbesserte Dekodierungsmöglichkeit gegeben; dies würde wiederum eine lokal erhöhte Bitfehlerrate wie bei oben erwähnter ungünstiger Punktierung bedeuten. Es ist demnach vorteilhaft, öfter einen gering erhöhten Wiederholungsabstand zu verwenden, als entsprechend seltener einen signifikant erhöhten Abstand. Um dieses Optimierungs-Kriterium zu erfüllen, wird das oben angeführte Verfahren zur Bestimmung der Verschiebung des Wiederholungsmusters in den einzelnen Spalten wie folgt modifiziert werden:

- Wenn der durchschnittliche Punktierungsabstand q berechnet wird, wird nicht nach unten zur nächsten kleineren ganzen Zahl abgerundet, sondern nach oben zur nächsten größeren ganzen Zahl (sofern q nicht bereits selbst ganzzahlig ist).

- Wenn q gerade ist, wird q nicht reduziert sondern erhöht.

Die oben angeführte Formel in der vereinfachten Form bzw. das oben angeführte vereinfachte Berechnungsverfahren sieht mit diesen Änderungen dann wie folgt aus (entsprechende Änderungen können natürlich auch bei der ersten vorgestellten Form der Formel oder bei beliebigen anderen Darstellungen durchgeführt werden, um die gewünschte Anpassung für Wiederholung zu erreichen):

```
q:= ( ⌈ Nc/(/NJ-Nc/)⌉ ) -- hier bedeutet ⌈ ⌉ aufrunden und //
den Absolutbetrag.
     -- Vermeide, die selbe Spalte zu früh ein zweites mal zu
treffen.
if q ist gerade
        then q = q + lcd(q, F)/F
        -- hier bezeichnet lcd (q, F) den größten gemeinsamen
Teiler von q und F.
        -- Der größte gemeinsame Teiler kann leicht durch Bit-
manipulationen berechnet werden, wenn F eine Zweierpotenz
ist.
        -- Aus dem selben Grund können die Berechnungen mit p
leicht durch binäre Fixpunktoperationen durchgeführt wer-
den. (oder alternativ durch Integer-Arithmetik unter Ver-
wendung von Verschiebeoperationen.
endif
-- Berechne S; S bedeutet die Verschiebung des Musters pro
Spalte.
for i = 0 to F-1
    S(RF (⌊i*q⌋ mod F)) = (⌊i*q⌋ div F)      -- hier bedeu-
tet ⌊ ⌋ abrunden.
            -- RF(k) (entspricht RF(k)) ist die Umkehrung des
ersten Verschachtlers, genauer gesagt die Umkehrung der
Spalten-Vertauschungsoperation des ersten Verschachtlers.
```

*Für den Fall des in der Entwicklung befindlichen UMTS-Systems ist diese Funktion selbst invers.*

**end for**

Der Parameter $e_{offset}$ kann dann wie folgt berechnet werden:

$$e_{offset}(k) = ((2 * S(k) * /N_i - N_c/ + 1) \bmod 2N_c$$

Die Punktierungs/Wiederholungs-Muster der einzelnen Spalten k werden relativ zueinander um den Betrag S(k) verschoben. Wird ein sog. Fehlerverteilungsalgorithmus für die Berechnung der zu punktierenden/wiederholenden Bits verwendet, so kann diese Verschiebung dadurch erreicht werden, dass der initiale Fehlerwert, wie oben gezeigt, vorgeladen wird. Natürlich sind zur Erzielung der Verschiebung auch andere Implementierungen möglich, insbesondere bei einer Verwendung eines anderen Punktierungsverfahrens innerhalb einer Spalte.

Es gibt einen weiteren Unterschied zwischen Punktierung und Wiederholung. Die Punktierungsrate kann selbst theoretisch auf keinen Fall 100% überschreiten (das bedeutet dass jedes Bit punktiert wird). In der Praxis wird die Dekodierungsleistung bei Punktierungsraten, die größer als etwa 20% (in Spezialfällen vielleicht 50%) sind so stark beeinträchtigt werden, dass man solch hohe Punktierungsraten vermeiden wird. Für die Wiederholungsrate existieren aber keine derartigen Beschränkungen. Eine Wiederholungsrate von 100% (d.h. jedes Bit wird zweimal übertragen) ist sehr wohl möglich, sogar höhere Wiederholungsraten sind möglich. Jedes Bit kann mehrmals wiederholt werden. Je mehr Wiederholungen gesendet werden, umso höher ist die Wahrscheinlichkeit für eine korrekte Dekodierung.

Eine Wiederholungsrate von 80% (d.h. 80% der Bits werden doppelt übertragen und 20% werden nur einmal übertragen (also nicht wiederholt)) kann auch so interpretiert werden, dass zwar jedes Bit wiederholt (also zweimal übertragen) wird, jedoch 20% der Bits (genauer gesagt 20% der ursprünglichen Bits vor der Verdoppelung) punktiert werden. Es werden also 20% der Bits mit einer im Vergleich zum Rest geringerer Energie und somit geringeren Verlässlichkeit übertragen. Dies ist sehr ähnlich zu dem Fall, dass 20% der Bits punktiert werden.

In beiden Fällen werden 20% der Bits mit einer im Vergleich zum Rest geringeren Verlässlichkeit übertragen. Allerdings ist der Unterschied der Verlässlichkeit bei Punktierung (über das punktierte Bit liegt gar keine Information vor) größer als bei einem Ausschluss von der Wiederholung, wo die Qualität der Information über das betroffene Bit immerhin noch halb so gut ist wie für die anderen Bits.

Wegen dieser Äquivalenz von 20% Punktierung und 80% Wiederholung wird ein Punktierungsmuster, welches für eine Punktierung von 20% optimal ist, auch für eine Wiederholung von 80% optimal sein, wenn die folgende Substitution vorgenommen wird:

| 20% Punktierung | 80% Wiederholung |
|---|---|
| punktiertes Bit | nicht wiederholtes Bit |
| nicht punktiertes Bit | wiederholtes Bit |

Ein Punktierungs- bzw. Wiederholungsverfahren, wie es oben beschrieben wurde und auch für UMTS in TS25.212 (nähere Angaben siehe oben) vorgesehen ist, wird für den Fall, dass die Punktierung vor dem ersten Verschachtler durchgeführt wird, auch in den beiden oben genannten Fällen äquivalente Muster generieren; allenfalls werden die Muster um einen konstanten Betrag relativ zueinander verschoben sein. Wird die Punktierung aber erst nach dem ersten Verschachtler (Inter-Rahmen-Verschachtler) durchgeführt, so erfordert dies eine Modifikation des Verfahrens. Diese Modifikation ist für den Fall der Punktierung in dem genannten Beitrag R1-99641 (optimierte Verschiebung der Punktierungs-Muster) beschrieben und für den Fall der Wiederholung oben beschrieben (optimierte Verschiebung der Muster für Wiederholung).

Die Punktierungs- oder Wiederholungsrate kann dargestellt werden als

$$r = (N_i - N_C) / N_C$$

wobei $N_c$ die Anzahl der Bits vor der Ratenanpassung ist und $N_i$ die Anzahl der Bits nach der Ratenanpassung. Wir definieren nun eine "äquivalente" Rate für den Fall der Wiederholung (d.h. $N_i > N_c$) als:

$$re = (\ (N_i - N_c/2)\ mod\ N_c - N_c/2)\ /\ N_c$$

Eine Punktierungsrate von 20% ist, was die optimale Verschiebung der Muster zwischen den Spalten anbelangt, also äquivalent zu einer Wiederholungsrate von 80%, 180%, 280% und so weiter. Genau so ist eine Wiederholungsrate von 30% äquivalent zu einer Wiederholungsrate von 130%, 230%, 330% und so weiter.

Ein weiterer Aspekt dieser Ausführungsvariante ist nun die Erkenntnis, das die relative Verschiebung der Punktierungsmuster in den einzelnen Spalten auch basierend auf dieser effektiven Wiederholungsrate re statt der tatsächlichen Wiederholungsrate berechnet werden kann. Je nachdem ob re dabei größer oder kleiner als 0 ist, wird dazu die Formel für die Berechnung der Verschiebung für Punktierung oder die Formel für die Berechnung der Verschiebung für Wiederholung verwendet werden.

Als ein weiteres Ausführungsbeispiel kann die Variable q auch als Inverses von re berechnet werden als:

$$q = N_c\ /\ (\ (N_i - N_c/2)\ mod\ N_c - N_c/2).$$

Es bestehen mehrere Möglichkeiten um $N_c/2$ zu berechnen, falls $N_c$ ungerade ist. Man kann aufrunden, abrunden oder auch mit Bruchteilswerten weiterrechnen, also auf das Runden verzichten. Das Vorzeichen von q trägt nach dieser Berechungsmethode die Information, ob eine Wiederholung oder Punktierung durchgeführt wird. Bevor q also in der entsprechenden Formel eingesetzt wird, kann es nötig sein, erst den Absolutbetrag zu berechnen.

Als weiteres Ausführungsbeispiel kann die Formel zur Berechnung der Verschiebungen des Musters auch wie folgt berechnet werden. Diese Formulierung hat den zusätzlichen Vorteil, dass keine Unterscheidung zwischen Punktierung und Wiederholung gemacht werden muss, sondern beide Fälle von der selben Formel abgedeckt werden. Es liegt im Rahmen fachmännischen Handelns, weitere Formeln anzugeben, welche die Verschiebung der Punktierungsmuster unter Berücksichtigung der oben dargestellten Prinzipien definieren.

$$q := \left\lceil N_c\ /\ (\ (N_i - N_c/2)\ mod\ N_c - N_c/2 \right\rceil$$

-- hierbei bedeutet $\lceil\ \rceil$ Aufrunden zur nächst größeren ganzen Zahl, z.B. ist $\lceil 1.5 \rceil = 2$ und $\lceil -1.5 \rceil = 1$ .

```
if q ist gerade   -- Vermeide die selbe Spalte zu früh ein
zweites mal zu treffen.
then q' = q + lcd(|q|, F)/F
-- hier bezeichnet lcd den größten gemeinsamen Teiler.
-- Der größte gemeinsame Teiler kann leicht durch Bitmani-
pulationen berechnet werden, wenn F eine Zweierpotenz ist.
-- q' ist keine ganze Zahl, sondern ein Vielfaches von
1/8, bzw. allgemeiner ein Vielfaches von F.
-- || bedeutet den Absolutbetrag
else
      q' = q
endif
-- Berechne S(k) , S bedeutet die Verschiebung des Musters
pro Spalte für den Rahmen k. S(k) kann wie oben gezeigt zur
Berechnung des initialen Fehlerwertes e in dem oben zitier-
ten Ratenanpassungsalgorithmus, wie er in der UMTS-
Spezifikation TS25.212 beschrieben ist, verwendet werden.
for i = 0 to F-1
    S(R_F (⌊⌊i*q'⌋⌋ mod F)) = (⌊⌊i*q'⌋⌋ div F)
        -- hier bedeutet ⌊ ⌋ abrunden.
end for
```

Im obigen Ausführungsbeispiel wird durch modulo-Operationen eine äquivalente Punktierungs/Wiederholungsrate re berechnet. Alternativ kann man modulo-Operationen auch nur nutzen, um Vielfache von 100% bei der Rate zu berücksichtigen, und die Unterscheidung, ob die Rate größer oder kleiner als 50% ist, durch eine Abfrage implementieren. Gleichzeitig kann man immer noch q als vorzeichenbehaftete Größe berechnen, um den Vorteil des vorherigen Ausführungsbeispiels, d.h. die einheitliche Berechnung von Punktierung und Wiederholung, zu bewahren. Um Divisionen durch 0 zu vermeiden, kann es ggf. notwendig sein, den Fall, dass keine Anpassung durchgeführt werden muss, gesondert zu behandeln. Damit gelangt man zu folgenden äquivalenten Formeln:

```
R = (N_i-N_c) mod N_c -- hierbei ist x mod N_c im Bereich von 0
bis N_c-1, d.h. -1 mod 10 = 9.
-- R ist somit die äquivalente Wiederholungsrate (die im
Bereich 0 bis 50% liegt) multipliziert mit N_c.

if  R ≠  0 und 2*R ≤  N_c

--Falls die äquivalente Wiederholungsrate kleiner 50% ist,
liegt Wiederholung vor, dann ist q > 0.
        then q = ⌈ N_c / R ⌉
else

--andernfalls liegt Punktierung vor, dann ist q < 0.
        q = ⌈ N_c / (R - N_c) ⌉
endif

-- q ist hier eine vorzeichenbehaftete Größe.

if q ist gerade
    then q' = q + lcd(|q|, F)/ F -- wobei lcd (|q|, F) den
größten gemeinsamen Teiler von |q| und F bedeutet.
    -- q' ist keine ganze Zahl sondern ein Vielfaches von 1/8
bzw. von 1/F.
else
q' = q
endif
for k = 0 to F - 1
        S(RF([| ⌊k*q'⌋ | mod F])) = (| ⌊k*q'⌋ | div F)
end for
```

Wie bereits mehrfach erwähnt, wird in den oben angegebenen Formeln der Effekt der Spaltenvertauschung innerhalb des Verschachtlers berücksichtigt. Der Vollständigkeit halber sei erwähnt, dass auch die durch diese Formeln beschriebenen Prinzipien durch äquivalente Notationen beschrieben werden können, welche zu einem äquivalenten Ergebnis führen. Ein Beispiel für geänderte eine geänderte Notation sei im folgenden kurz dargestellt:

$$N_c \rightarrow N_{i,j}$$

$$N_i - N_c \rightarrow delta\ N_{i,j}$$

$$S(k) \rightarrow S(Pl_{Fi}(n_i)) = S(RF(x))$$

$$F \rightarrow F_i\ .$$

Fig. 1 zeigt das resultierende Muster für das vorgeschlagene Wiederholungsmuster für eine Wiederholungsrate von 1:4. Fett gedruckte Zahlen bzw. Zahlen an denen Pfeile beginnen oder enden bezeichnen zu wiederholende Bits. Die Pfeile mit dünnen Umrisslinien (z.B. der Pfeil von 8 nach 12) bezeichnen einen Abstand zwischen benachbarten wiederholten Bits von 4, dünn gezeichnete Pfeile (z.B. der Pfeil von 12 nach 17) den Abstand 5 und der Pfeil in dicker Umrisslinie (z.B. der Pfeil von 39 nach 40) den Abstand 1.

Zum Vergleich zeigt Fig. 8 den selben Fall für das bisher angewandte Wiederholungsverfahren, wie es z.B. in R1-99641 vorgestellt wurde. Die Pfeile mit dünnen Umrisslinien (z.B. der Pfeil von 8 nach 12) bezeichnen einen Abstand zwischen benachbarten wiederholten Bits von 4, dünn gezeichnete Pfeile (z.B. der Pfeil von 12 nach 15) den Abstand 3 und der Pfeil in dicker Umrisslinie (z.B. der Pfeil von 33 nach 40) den Abstand 7.

Vergleicht man die beiden Abbildungen, so sieht man, dass das im Rahmen der Erfindung liegende Wiederholungsmuster einen größeren Abstand zwischen wiederholten Bits (7 in Fig. 8) vermeidet. Da insbesondere die großen Abstände zwischen Wiederholungen eine Beeinträchtigung der Performance bewirken, und da das erfindungsgemäße Verfahren solche großen Abstände vermeidet, ist die Anwendung des erfindungsgemäßen Verfahren vorteilhaft.

Somit lassen sich mit dem erfindungsgemäßen Wiederholungsverfahren praktisch optimale Wiederholungsmuster generieren, wenn die Ratenanpassung nach dem ersten Verschachtler angewandt wird. Das Verfahren ist dabei nicht besonders aufwendig, zumal es nur einmal pro Funkrahmen angewandt werden muss, nicht für jedes Bit.

**Patentansprüche**

1. Verfahren zur Datenratenanpassung in einem UMTS-System,

   - bei dem zu übertragende Daten in Form von Bits durch einen ersten Verschachtler auf einen Satz von Rahmen verteilt werden,
   - bei dem zur Datenratenanpassung nach dem Verschachteln ein Wiederholungsverfahren derart durchgeführt wird, dass in jedem Rahmen die gleiche Anzahl von Bits wiederholt wird,
   - bei dem das innerhalb eines Rahmens angewendete Wiederholungsmuster verschoben auch innerhalb weiterer Rahmen des Satzes von Rahmen angewendet wird, und
   - bei dem zu wiederholende Bits durch ein Verfahren erhältlich sind, das folgende Schritte enthält:

      a) Bestimmung eines ganzzahligen Anteils q der mittleren Wiederholungsdistanz mit $q := (\lceil N_c/(N_i-N_c) \rceil)$, wobei $\lceil\ \rceil$ Aufrunden und $N_i$ und $N_c$ die Anzahl der Bits nach und vor der Ratenanpassung bedeutet;
      b) Auswahl eines zu wiederholenden Bit in einer ersten Spalte;
      c) Auswahl eines nächsten zu wiederholenden Bit in einer nächsten Spalte ausgehend von dem zuletzt zu wiederholenden Bit in der vorigen Spalte dadurch, dass beginnend mit diesem zuletzt zu wiederholenden Bit jeweils das nächste Bit mit Abstand q, bezogen auf die ursprüngliche Reihenfolge, ausgewählt wird, sofern dies nicht dazu führt, dass aus einer Spalte ein weiteres Bit wiederholt wird, ansonsten ein Bit mit gegenüber q verändertem Abstand ausgewählt wird;
      d) Wiederholung des Schritts c) bis aus allen Spalten einmal ein Bit wiederholt wurde,

   - wobei die Verschiebung S(k) der Anwendung des Wiederholungsmusters auf den Rahmen k durch folgendes Verfahren erhältlich ist:
   - für den Fall, dass q gerade ist, die mittlere Wiederholungsdistanz q berechnet wird mit:

      $q = q + lcd(q, F)/F$, wobei lcd (q, F) den größten gemeinsamen Teiler von q und F und wobei F die Anzahl von Rahmen bezeichnen,

   - bei dem S(k) als Verschiebung der Spalte k berechnet wird mit:

$S(\lfloor i*q \rfloor \bmod F) = (\lfloor i*q \rfloor \operatorname{div} F)$, für i=0 bis F-1, wobei $\lfloor \; \rfloor$ Abrunden bedeutet.

**2.** Verfahren zur Datenratenanpassung in einem UMTS-System,

- bei dem zu übertragende Daten in Form von Bits durch einen ersten Verschachtler auf einen Satz von Rahmen verteilt werden,
- bei dem zur Datenratenanpassung nach dem Verschachteln ein Wiederholungsverfahren derart durchgeführt wird, dass in jedem Rahmen die gleiche Anzahl von Bits wiederholt wird,
- bei dem das innerhalb eines Rahmens angewendete Wiederholungsmuster verschoben auch innerhalb weiterer Rahmen des Satzes von Rahmen angewendet wird, und
- bei dem zu wiederholende Bits durch ein Verfahren erhältlich sind, das folgende Schritte enthält:

a) Bestimmung eines ganzzahligen Anteils q der mittleren Wiederholungsdistanz mit $q := (\lceil N_c / (N_i - N_c) \rceil)$, wobei $\lceil \; \rceil$ Aufrunden und $N_i$ und $N_c$ die Anzahl der Bits nach und vor der Ratenanpassung bedeuten;
b) Auswahl eines zu wiederholenden Bit in einer ersten Spalte;
c) Auswahl eines nächsten zu wiederholenden Bit in einer nächsten Spalte ausgehend von dem zuletzt zu wiederholenden Bit in der vorigen Spalte dadurch, dass beginnend mit diesem zuletzt zu wiederholenden Bit jeweils das nächste Bit mit Abstand q, bezogen auf die ursprüngliche Reihenfolge, ausgewählt wird, sofern dies nicht dazu führt, dass aus einer Spalte ein weiteres Bit wiederholt wird, ansonsten ein Bit mit gegenüber q verändertem Abstand ausgewählt wird;
d) Wiederholung des Schritts c) bis aus allen Spalten einmal ein Bit wiederholt wurde,

- wobei die Verschiebung S(k) der Anwendung des Wiederholungsmusters auf den Rahmen k durch folgendes Verfahren erhältlich ist:
- Berechnen der mittleren Wiederholungsdistanz

$$q := \left\lceil N_C / ( (N_i - N_C/2) \bmod N_C - N_C/2) \right\rceil,$$

wobei $\lceil \; \rceil$ Aufrunden zur nächst größeren ganzen Zahl bedeutet,
- bei dem für den Fall, dass q gerade ist, eine mittlere Wiederholungsdistanz berechnet wird mit:

$$q' = q + \operatorname{lcd}(|q|, F)/F,$$

wobei lcd den größten gemeinsamen Teiler bezeichnet, wobei $| \; |$ Absolutbetrag bedeutet und wobei q' ein Vielfaches von 1/8 oder ein Vielfaches von F ist und wobei F die Anzahl von Rahmen bezeichnet,
- bei dem für alle anderen Fälle gilt: q' = q
- bei dem S(k) als Verschiebung der Spalte k berechnet wird mit:

$$S(|\lfloor i*q' \rfloor| \bmod F) = (|\lfloor i*q' \rfloor| \operatorname{div} F),$$

für i=0 bis F-1,
wobei $\lfloor \; \rfloor$ Abrunden bedeutet.

**3.** Verfahren zur Datenratenanpassung in einem UMTS-System,

- bei dem zu übertragende Daten in Form von Bits durch einen ersten Verschachtler auf einen Satz von Rahmen verteilt werden,
- bei dem zur Datenratenanpassung nach dem Verschachteln ein Wiederholungsverfahren derart durchgeführt wird, dass in jedem Rahmen die gleiche Anzahl von Bits wiederholt wird,
- bei dem das innerhalb eines Rahmens angewendete Wiederholungsmuster verschoben auch innerhalb weiterer Rahmen des Satzes von Rahmen angewendet wird, und
- bei dem zu wiederholende Bits durch ein Verfahren erhältlich sind, das folgende Schritte enthält:

a) Bestimmung eines ganzzahligen Anteils q der mittleren Wiederholungsdistanz mit $q := (\lceil N_c / (N_i - N_c) \rceil)$,

wobei ⌈ ⌉ Aufrunden und $N_i$ und $N_c$ die Anzahl der Bits nach und vor der Ratenanpassung bedeuten;

b) Auswahl eines zu wiederholenden Bit in einer ersten Spalte;

c) Auswahl eines nächsten zu wiederholenden Bit in einer nächsten Spalte ausgehend von dem zuletzt zu wiederholenden Bit in der vorigen Spalte dadurch, dass beginnend mit diesem zuletzt zu wiederholenden Bit jeweils das nächste Bit mit Abstand q, bezogen auf die ursprüngliche Reihenfolge, ausgewählt wird, sofern dies nicht dazu führt, dass aus einer Spalte ein weiteres Bit wiederholt wird, ansonsten ein Bit mit gegenüber q verändertem Abstand ausgewählt wird;

d) Wiederholung des Schritts c) bis aus allen Spalten einmal ein Bit wiederholt wurde,

- woei die Verschiebung s(k) der Anwendung des Wiederholungsmusters auf den Rahmen k gegenüber der Anwendung des Wiederholungsmusters auf den Rahmen k = 0 durch folgende Schritte erhältlich ist:

e) Berechnen einer geänderten mittleren Wiederholungsdistanz qgeändert, wenn q gerade ist:

qgeändert = q + lcd(q, F)/F,
wobei F die Anzahl der Spalten und lcd (q, F) den

größten gemeinsamen Teiler von q und F bezeichnet;

f) Setzen einer Variablen i=0,

g) Berechnen von S(k) gemäß folgender Beziehung s(⌊i*q⌋ mod F) = (⌊i*q⌋ div F), wobei ⌊ ⌋ Abrunden bedeutet;

h) Erhöhen von i um eins;

i) Wiederholen der Schritte g) und h) bis i = F-1 ist.

4. Verfahren nach einem der Ansprüche 1 bis 3,

- bei dem die Wiederholungsrate kein ganzzahliger Bruchteil (1/p) ist oder der Kehrwert (p) der Wiederholungsrate und die Anzahl von Rahmen F keinen gemeinsamen Teiler aufweisen, und

- bei dem die Verschiebung der Anwendung des Wiederholungsmusters auf Rahmen entsprechend der relativen Verschiebung der nächstniedrigeren Wiederholungsrate erfolgt, die ein ganzzahliger Bruchteil (1/p) ist, wobei der Kehrwert (p) der Wiederholungsrate und die Anzahl von Rahmen F keinen gemeinsamen Teiler aufweisen.

5. Verfahren nach Anspruch 2, bei dem für die Bestimmung des nächsten Bit der Abstand q+1 gewählt wird, wenn die Verwendung des Abstands q dazu führen würde, dass eine Spalte doppelt wiederholt wird.

6. Datenratenanpassungsvorrichtung mit einer Prozessoreinrichtung, die zur Durchführung eines Verfahrens nach einem der Ansprüche 1 bis 5 ausgebildet sind.

## Claims

1. Method for data rate matching in a UMTS system

- in which the data to be transmitted in the form of bits are distributed by a first interleaver over a set of frames,

- in which, for the data rate matching after the interleaving, a repetition method is performed such that the same number of bits are repeated in each frame,

- in which the repetition pattern applied within a frame is also applied in displaced fashion within further frames of the set of frames, and

- in which bits to be repeated can be obtained by a method comprising the following steps:

a) determination of an integer component q of the mean repetition distance with

$$q := ( \lceil N_c / (N_i - N_c) \rceil )$$

where ⌈ ⌉ signifies rounding up and $N_i$ and $N_c$ signify the number of bits after and before the data rate matching;

b) selection of a bit to be repeated in a first column;

c) selection of a next bit to be repeated in a next column starting from the last bit to be repeated in the preceding column in that, starting with this last bit to be repeated, in each case the next bit with the spacing q, based on the original sequence, is selected as long as this does not result in a further bit from a column being repeated, otherwise a bit with a spacing changed from q is selected;

d) repetition of step c) until one bit has been repeated once from all columns,

- wherein the displacement S (k) of the application of the repetition pattern to the frame k can be obtained using the following method:

- if q is even, the mean repetition distance q is calculated with:

q = q + lcd(q, F)/F, where lcd (q, F) signifies the greatest common divisor of q and F and where F signifies the number of frames

- in which S (k) as the displacement of the column k is calculated with:

$$S(\lfloor i*q \rfloor \bmod F) = (\lfloor i*q \rfloor \operatorname{div} F), \text{ for } i=0 \text{ to } F-1,$$

where $\lfloor \ \rfloor$ signifies rounding down.

2. Method for data rate matching in a UMTS system,

- in which data to be transmitted in the form of bits are distributed by a first interleaver over a set of frames,
- in which, for the data rate matching after the interleaving, a repetition method is performed such that the same number of bits are repeated in each frame,
- in which the repetition pattern applied within a frame is also applied in a displaced fashion within further frames of the set of frames, and
- in which bits to be repeated can be obtained by a method comprising the following steps:

a) determination of a integer component q of the mean repetition distance with

$$q := (\ \lceil N_c / (N_i - N_c) \rceil \ ),$$

where $\lceil \ \rceil$ signifies rounding up and $N_i$ and $N_c$ signify the number of bits after and before the rate matching;

b) selection of a bit to be repeated in a first column;

c) selection of a next bit to be repeated in a next column starting from the last bit to be repeated in the preceding column in that, starting with this last bit to be repeated, in each case the next bit with the spacing q, based on the original sequence, is selected as long as this does not result in a further bit from a column being repeated, otherwise a bit with a spacing changed from q is selected;

d) repetition of step c) until one bit has been repeated once from all columns,

- wherein the displacement S (k) of the application of the repetition pattern to the frame k can be obtained using the following method:

- calculation of the mean repetition distance

$$q := \lceil N_C / ( (N_i - N_C/2) \bmod N_C - N_C/2) \rceil,$$

where $\lceil \ \rceil$ signifies rounding up to the next greater whole number,

- in which, if q is even, a mean repetition distance is calculated with:

$$q' = q + \operatorname{lcd}(|q|, F)/F,$$

where lcd signifies the greatest common divisor, where | | signifies an absolute amount and where q' is a multiple of 1/8 or a multiple of F and where F signifies the number of frames,

- in which the following applies for all other cases: q' = q
- in which S(k) as the displacement of the column k is calculated with:

$$S(\lceil\lfloor i*q'\rfloor\rceil \bmod F) = (\lceil\lfloor i*q'\rfloor\rceil \ \mathrm{div} \ F),$$

for i=0 to F-1,
where $\lfloor\ \rfloor$ signifies rounding down.

3. Method for data rate matching in a UMTS system,

- in which the data to be transmitted in the form of bits are distributed by a first interleaver over a set of frames,
- in which, for the data rate matching after the interleaving, a repetition method is performed such that the same number of bits are repeated in each frame,
- in which the repetition pattern applied within a frame is also applied in displaced fashion within further frames of the set of frames, and
- in which the bits to be repeated can be obtained by a method comprising the following steps:

   a) determination of an integer component q of the mean repetition distance with

$$q := (\lceil N_c / (N_i - N_c)\rceil)$$

   where $\lceil\ \rceil$ signifies rounding up and $N_i$ and $N_c$ signify the number of bits after and before the data rate matching;
   b) selection of a bit to be repeated in a first column;
   c) selection of a next bit to be repeated in a next column starting from the last bit to be repeated in the preceding column in that, starting with this last bit to be repeated, in each case the next bit with the spacing q, based on the original sequence, is selected as long as this does not result in a further bit from a column being repeated, otherwise a bit with a spacing changed from q is selected;
   d) repetition of step c) until one bit has been repeated once from all columns,

- wherein the displacement S (k) of the application of the repetition pattern to the frame k by comparison with the application of the repetition pattern to the frame k=0 can be obtained by means of the following steps:

   e) calculation of a changed mean repetition distance qchanged if q is even:

$$\mathrm{qchanged} = q + \mathrm{lcd}(q, \ F)/F,$$

   where F is the number of columns and lcd (q, F) signifies the greatest common divisor of q and F;
   f) setting a variable i=0,
   g) calculation of S(k) in accordance with the following relationship

$$S(\lfloor i*q\rfloor \bmod F) = (\lfloor i*q\rfloor \ \mathrm{div} \ F),$$

   where $\lfloor\ \rfloor$ signifies rounding down;
   h) increasing i by one;
   i) repetition of the steps g) and h) until i = F-1.

4. Method according to any one of claims 1 to 3,

- in which the repetition rate is not an integral faction (1/p) or the inverse (p) of the repetition rate and the number of frames F do not have a common divisor and
- in which the displacement of the application of the repetition pattern to frames is performed according to the relative displacement of the next lower repetition rate which is an integral fraction (1/p), wherein the inverse value (p) of the repetition rate and the number of frames F do not have a common divisor.

5. Method according to claim 2 in which the spacing q+1 is selected for the determination of the next bit if the use of the spacing q would result in a column being repeated twice.

6. Data rate matching device with a processor device embodied to carry out a method according to any one of claims 1 to 5.

**Revendications**

1. Procédé d'adaptation de débits de données dans un système UMTS (système de télécommunication mobile universel),

    - dans lequel les données à transmettre sont distribuées sous la forme de bits sur une série de trames par un premier dispositif d'entrelacement ;
    - dans lequel, pour l'adaptation du débit des données après l'entrelacement, un procédé de répétition est exécuté de sorte que le même nombre de bits soit répété dans chaque trame ;
    - dans lequel le motif répétitif appliqué à l'intérieur d'une trame est aussi appliqué, décalé, à l'intérieur d'autres trames de la série de trames, et
    - dans lequel les bits à répéter peuvent être obtenus par un procédé comprenant les étapes suivantes :

        a) détermination d'une fraction entière q de la distance moyenne de répétition où $q := (\lceil N_c/ (N_i-N_c) \rceil)$, wird. 1 désignant l'arrondi au nombre supérieur et $N_i$ et $N_c$, le nombre des bits après et avant l'adaptation du débit ;
        b) sélection d'un bit à répéter, dans une première colonne ;
        c) sélection d'un bit suivant à répéter, dans une colonne suivante, en partant du dernier bit à répéter, dans la colonne précédente, de telle sorte qu'en commençant par ce dernier bit à répéter, le bit suivant soit chaque fois sélectionné suivant une distance q, rapportée à la séquence initiale, dans la mesure où cela ne conduit pas à la répétition d'un bit supplémentaire d'une colonne, sinon on sélectionne un bit à une distance modifiée par rapport à q ;
        d) répétition de l'étape c) jusqu'à ce qu'un bit de toutes les colonnes ait été répété une fois,

    - étant entendu que le décalage S(k) de l'application du motif répétitif sur la trame k peut être obtenu par le procédé suivant :
    - dans le cas où q est pair, on calcule la distance moyenne de répétition au moyen de la formule :

        q = q + lcd(q, F)/F, où lcd (q, F) désigne le plus grand diviseur commun de q et F et où F désigne le nombre de trames,

    - dans lequel S(k) en tant que décalage de la colonne k est calculé au moyen de la formule :

$$S(\lfloor i*q \rfloor \bmod F) = (\lfloor i*q \rfloor \operatorname{div} F), \text{ pour } i = 0 \text{ jusqu'à } F-1,$$

    où $\lceil \ \rceil$ désigne l'arrondi au nombre inférieur.

2. Procédé d'adaptation de débits de données dans un système UMTS,

    - dans lequel les données à transmettre sont distribuées sous la forme de bits sur une série de trames par un premier dispositif d'entrelacement ;
    - dans lequel, pour l'adaptation du débit des données après l'entrelacement, un procédé de répétition est exécuté de telle sorte que le même nombre de bits soit répété dans chaque trame ;
    - dans lequel le motif répétitif appliqué à l'intérieur d'une trame est aussi appliqué, décalé, à l'intérieur d'autres trames de la série de trames, et
    - dans lequel les bits à répéter peuvent être obtenus par un procédé comprenant les étapes suivantes :

        a) détermination d'une fraction entière q de la distance moyenne de répétition où $q := (\lceil N_c/(N_i-N_c) \rceil)$, $\lceil \ \rceil$ désignant l'arrondi au nombre supérieur et $N_i$ et $N_c$, le nombre des bits après et avant l'adaptation du débit ;

b) sélection d'un bit à répéter dans une première colonne ;

c) sélection d'un bit suivant à répéter, dans une colonne suivante en partant du dernier bit à répéter, dans la colonne précédente, de telle sorte qu'en commençant par ce dernier bit à répéter, le bit suivant soit chaque fois sélectionné suivant une distance q, rapportée à la séquence initiale, dans la mesure où cela ne conduit pas à la répétition d'un bit supplémentaire d'une colonne, sinon on sélectionne un bit à une distance modifiée par rapport à q ;

d) répétition de l'étape c) jusqu'à ce qu'un bit de toutes les colonnes ait été répété une fois,

- étant entendu que le décalage S(k) de l'application du motif répétitif sur la trame k peut être obtenu par le procédé suivant :

- calcul de la distance moyenne de répétition

$$q := \lceil N_C / ((N_i - N_C/2) \bmod N_C - N_C/2) \rceil,$$

où $\lceil \ \rceil$ désigne l'arrondi au nombre entier supérieur suivant,

- dans lequel, pour le cas où q est pair, on calcule une distance moyenne de répétition au moyen de la formule :

$$q' = q + \mathrm{lcd}(|q|, F)/F,$$

où lcd désigne le plus grand diviseur commun,

où | | désigne le module et où q' est un multiple de 1/8 ou un multiple de F et où F désigne le nombre de trames,

- dans lequel q' = q dans tous les autres cas,

- dans lequel S(k) en tant que déplacement de la colonne k est calculé au moyen de la formule :

$$S(|\lfloor i*q' \rfloor| \bmod F) = (|\lfloor i*q' \rfloor| \operatorname{div} F),$$

pour i = 0 jusqu'à F-1,

où $\lceil \ \rceil$ désigne l'arrondi au nombre inférieur.

3. Procédé d'adaptation de débits de données dans un système UMTS,

- dans lequel les données à transmettre sont distribuées sous la forme de bits sur une série de trames par un premier dispositif d'entrelacement ;

- dans lequel, pour l'adaptation du débit des données après l'entrelacement, un procédé de répétition est exécuté de sorte que le même nombre de bits soit répété dans chaque trame ;

- dans lequel le motif répétitif appliqué à l'intérieur d'une trame est aussi appliqué, décalé, à l'intérieur d'autres trames de la série de trames, et

- dans lequel les bits à répéter peuvent être obtenus par un procédé comprenant les étapes suivantes :

a) détermination d'une fraction entière q de la distance moyenne de répétition où q := ($\lceil N_C / (N_i - N_C) \rceil$), wird. $\lceil \ \rceil$ désignant l'arrondi au nombre supérieur et $N_i$ et $N_C$, le nombre des bits après et avant l'adaptation du débit ;

b) sélection d'un bit à répéter, dans une première colonne ;

c) sélection d'un bit suivant à répéter, dans une colonne suivante, en partant du dernier bit à répéter, dans la colonne précédente, de sorte qu'en commençant par ce dernier bit à répéter, le bit suivant soit chaque fois sélectionné suivant une distance q, rapportée à la séquence initiale, dans la mesure où cela ne conduit pas à la répétition d'un bit supplémentaire d'une colonne, sinon on sélectionne un bit à une distance modifiée par rapport à q ;

d) répétition de l'étape c) jusqu'à ce qu'un bit de toutes les colonnes ait été répété une fois,

- étant entendu que le décalage S(k) de l'application du motif répétitif sur la trame k, par rapport à l'application du motif répétitif sur la trame k = 0, peut être obtenu par les étapes suivantes :

e) calcul d'une distance moyenne de répétition qmodifiée lorsque q est pair :

$$q \text{ modifié} = q + \text{lcd}(q, F)/F,$$

où F désigne le nombre de colonnes et lcd (q, F), le plus grand diviseur commun de q et F ;
f) forçage d'une variable i=0 ;
g) calcul de S(k) selon l'équation suivante :

$$S(\lfloor i*q \rfloor \bmod F) = (\lfloor i*q \rfloor \operatorname{div} F),$$

où $\lfloor \ \rfloor$ désigne l'arrondi au nombre inférieur ;
h) incrémentation de i d'une unité ;
i) répétition des étapes g) et h) jusqu'à ce que i = F-1.

4. Procédé selon l'une quelconque des revendications 1 à 3,

   - dans lequel le taux de répétition n'est pas une fraction entière (1/p) ou l'inverse (p) du taux de répétition et le nombre de trames F n'ont pas de diviseur commun, et
   - dans lequel le décalage de l'application du motif répétitif sur des trames s'effectue conformément au décalage relatif du taux de répétition inférieur le plus proche qui est une fraction entière (1/p), l'inverse (p) du taux de répétition et le nombre de trames F n'ayant pas de diviseur commun.

5. Procédé selon la revendication 2, dans lequel, pour déterminer le bit suivant, on sélectionne la distance q+1 lorsque l'utilisation de la distance q conduirait à répéter une colonne deux fois.

6. Dispositif d'adaptation de débit de données avec un dispositif formant processeur configuré pour exécuter le procédé selon l'une quelconque des revendications 1 à 5.

# FIG 1

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |
| 32 | 33 | 34 | 35 | 36 | 37 | 38 | 39 |
| 40 | 41 | 42 | 43 | 44 | 45 | 46 | 47 |
| 48 | 49 | 50 | 51 | 52 | 53 | 54 | 55 |
| 56 | 57 | 58 | 59 | 60 | 61 | 62 | 63 |

# FIG 3

# FIG 2

# FIG 4

| 0 | 1 | 2 | 3 | 4 | 5 | 6 | 7 |
|---|---|---|---|---|---|---|---|
| 8 | 9 | 10 | 11 | **12** | 13 | 14 | 15 |
| 16 | 17 | **18** | 19 | 20 | 21 | 22 | **23** |
| 24 | 25 | 26 | 27 | 28 | **29** | 30 | 31 |
| 32 | 33 | 34 | **35** | 36 | 37 | 38 | 39 |
| 40 | **41** | 42 | 43 | 44 | 45 | 46 | 47 |
| **48** | 49 | 50 | 51 | 52 | 53 | **54** | 55 |
| 56 | 57 | 58 | 59 | **60** | 61 | 62 | 63 |
| 64 | 65 | **66** | 67 | 68 | 69 | 70 | **71** |
| 72 | 73 | 74 | 75 | 76 | **77** | 78 | 79 |
| 80 | 81 | 82 | **83** | 84 | 85 | 86 | 87 |

# FIG 5

| S.T | K | 1 | 2 | | 4 | | | | 8 | | | | | | | |
|---|---|---|---|---|---|---|---|---|---|---|---|---|---|---|---|---|
| | k | 0 | 0 | 1 | 0 | 1 | 2 | 3 | 0 | 1 | 2 | 3 | 4 | 5 | 6 | 7 |
| Q 1 | | 0; 0 | 0; 0 | 0; 1 | 0; 0 | 0; 2 | 0; 1 | 0; 3 | 0; 0 | 0; 4 | 0; 2 | 0; 6 | 0; 1 | 0; 5 | 0; 3 | 0; 7 |
| 2 | | | 0; 0 | 1; 1 | 0; 0 | 0; 1 | 1; 3 | 0; 2 | 0; 0 | 0; 2 | 0; 1 | 0; 3 | 1; 5 | 1; 7 | 1; 6 | 0; 4 |
| 3 | | | | | 0; 0 | 1; 2 | 2; 3 | 0; 1 | 0; 0 | 1; 4 | 2; 6 | 0; 2 | 1; 3 | 2; 7 | 0; 1 | 1; 5 |
| 4 | | | | | 0; 0 | 1; 2 | 2; 3 | 0; 1 | 0; 0 | 0; 1 | 2; 5 | 1; 4 | 3; 7 | 2; 6 | 1; 3 | 0; 2 |
| 5 | | | | | | | | | 0; 0 | 3; 4 | 2; 2 | 4; 6 | 4; 5 | 1; 1 | 5; 7 | 2; 3 |
| 6 | | | | | | | | | 0; 0 | 1; 2 | 2; 3 | 0; 1 | 5; 7 | 3; 5 | 4; 6 | 2; 4 |
| 7 | | | | | | | | | 0; 0 | 3; 4 | 5; 6 | 1; 2 | 6; 7 | 2; 3 | 4; 5 | 0; 1 |
| 8 | | | | | | | | | 0; 0 | 3; 4 | 5; 6 | 1; 2 | 6; 7 | 2; 3 | 4; 5 | 0; 1 |

# FIG **6**

| 0 | 1 | **2** | 3 | 4 | 5 | 6 | 7 |
|---|---|---|---|---|---|---|---|
| 8 | 9 | 10 | 11 | **12** | 13 | 14 | 15 |
| 16 | **17** | 18 | 19 | 20 | 21 | **22** | 23 |
| 24 | 25 | 26 | **27** | 28 | 29 | 30 | 31 |
| **32** | 33 | 34 | 35 | 36 | **37** | 38 | 39 |
| 40 | 41 | **42** | 43 | 44 | 45 | 46 | **47** |
| 48 | 49 | 50 | 51 | **52** | 53 | 54 | 55 |
| 56 | **57** | 58 | 59 | 60 | 61 | **62** | 63 |
| 64 | 65 | 66 | **67** | 68 | 69 | 70 | 71 |
| **72** | 73 | 74 | 75 | 76 | **77** | 78 | 79 |
| 80 | 81 | **82** | 83 | 84 | 85 | 86 | **87** |
| 88 | 89 | 90 | 91 | **92** | 93 | 94 | 95 |
| 96 | **97** | 98 | 99 | 100 | 101 | **102** | 103 |
| 104 | 105 | 106 | **107** | 108 | 109 | 110 | 111 |
| **112** | 113 | 114 | 115 | 116 | **117** | 118 | 119 |
| 120 | 121 | **122** | 123 | 124 | 125 | 126 | **127** |
| 128 | 129 | 130 | 131 | **132** | 133 | 134 | 135 |
| 136 | **137** | 138 | 139 | 140 | 141 | **142** | 143 |
| 144 | 145 | 146 | **147** | 148 | 149 | 150 | 151 |
| **152** | 153 | 154 | 155 | 156 | **157** | 158 | 159 |

## FIG 7

| 0 | 1 | 2 | **3** | 4 | 5 | 6 | 7 |
|---|---|---|---|---|---|---|---|
| 8 | 9 | **10** | 11 | 12 | 13 | 14 | 15 |
| 16 | **17** | 18 | 19 | 20 | 21 | 22 | 23 |
| 24 | 25 | 26 | 27 | 28 | 29 | 30 | 31 |
| **32** | 33 | 34 | 35 | 36 | 37 | 38 | **39** |
| 40 | 41 | 42 | 43 | 44 | 45 | **46** | 47 |
| 48 | 49 | 50 | 51 | 52 | **53** | 54 | 55 |
| 56 | 57 | 58 | 59 | **60** | 61 | 62 | 63 |
| 64 | 65 | 66 | **67** | 68 | 69 | 70 | 71 |
| 72 | 73 | **74** | 75 | 76 | 77 | 78 | 79 |
| 80 | **81** | 82 | 83 | 84 | 85 | 86 | 87 |
| 88 | 89 | 90 | 91 | 92 | 93 | 94 | 95 |
| **96** | 97 | 98 | 99 | 100 | 101 | 102 | **103** |
| 104 | 105 | 106 | 107 | 108 | 109 | **110** | 111 |
| 112 | 113 | 114 | 115 | 116 | **117** | 118 | 119 |
| 120 | 121 | 122 | 123 | **124** | 125 | 126 | 127 |

## FIG 8

| 0 | 1 | 2 | 3 | 4 | 5 | 6 | 7 |
|---|---|---|---|---|---|---|---|
| 8 | 9 | 10 | 11 | 12 | 13 | 14 | 15 |
| 16 | 17 | 18 | 19 | 20 | 21 | 22 | 23 |
| 24 | 25 | 26 | 27 | 28 | 29 | 30 | 31 |
| 32 | 33 | 34 | 35 | 36 | 37 | 38 | 39 |
| 40 | 41 | 42 | 43 | 44 | 45 | 46 | 47 |
| 48 | 49 | 50 | 51 | 52 | 53 | 54 | 55 |
| 56 | 57 | 58 | 59 | 60 | 61 | 62 | 63 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0912009 A